# EUROPEAN PATENT APPLICATION

(11) **EP 4 235 105 A1**
(43) Date of publication of application: **30.08.2023**
(21) Application number: 22158639.9
(22) Date of filing: 24.02.2022
(51) Int. Cl.: G01C 21/36, G06Q 10/04, G08G 1/00

(54) **A METHOD FOR OPERATING AN ASSISTANCE SYSTEM OF A MOTOR VEHICLE, A COMPUTER PROGRAM PRODUCT AS WELL AS A CORRESPONDING ASSISTANCE SYSTEM**

(71) Applicant: VOLKSWAGEN AG, 38440 Wolfsburg (DE)
(72) Inventor: Dondapati, Chaitanya Kumar, 85640 Putzbrunn (DE)

(57) **Abstract**

Furthermore, the invention relates to a computer program product as well as to an assistance system and method for operating an assistance system (2) of a motor vehicle (1), comprising the steps of: detecting a current position (P) of the motor vehicle (1) by a position detection device (4) of the assistance system (2), determining a plurality of further motor vehicles (6, 7, 8, 9) in a predetermined area (10) around the detected position (P) by an electronic computing device (3) of the assistance system (2), determining a plurality of current destinations (A, B, C) of each of the further motor vehicle (6, 7, 8, 9) of the plurality of further motor vehicles (6, 7, 8, 9) and creating a list (11) of the determined destinations (A, B, C) and presenting the list (11) of the determined destination (A, B, C) on an output device (5) of the assistance system (2).

## Description

The invention relates to a method for operating an assistance system of a motor vehicle. Furthermore, the invention relates to a computer program product, a computer-readable storage medium, an assistance system as well as to a corresponding motor vehicle.

From the state of the art it is known, that a user of a motor vehicle can use a navigation system, for getting to a destination the user wants to drive. In particular, sometimes, a user may want to get a special destination, which may be corresponding to the time or day of the week, for example, at the weekend, the user may go to another destination type than during the working days. A user may use the information other users in order to get a destination, where he wants to drive with the motor vehicle.

US 2017/0178626 A1 provides an automated assistance system engaging with the user and integrate, conversational manner using natural language dialogue, and invokes external services when operated to obtain information or perform various actions.

US 2014/07229323 A1 presents a recommendation server providing product or service suggestions to a user based on transaction and location data.

EP 1 526 494 A1 relates to a navigation apparatus and a service providing method of using a navigation apparatus.

It is an object of the invention to provide a method, a computer program product, a computer-readable storage medium, an assistance system as well as a motor vehicle, by which a much more comfortable navigation of the motor vehicle may be realized.

This object is solved by a method, a computer program product, a computer-readable storage medium, an assistance system as well as a motor vehicle according to the independent claims. Advantageous forms of configuration are presented in the dependent claims.

One aspect of the invention relates to a method for operating an assistance system of a motor vehicle. A current position of the motor vehicle is detected by a position detection device of the assistance system. A plurality of further motor vehicles is determined in a an area around the detected position by an electronic computing device of the assistance system. Determining a plurality of current destinations of each of the further motor vehicles of the plurality of further motor vehicles is determined. A list of the determined destinations is created and presented on an output device of the assistance system.

Therefore, a comfortable way for navigation for a user of the motor vehicle may be presented. For example, when the user would like to go for a drive but is unsure, where the go because it is a rainy weather and obviously the user may not go to outer places the method is used, where the user just has to click on a button which shows the target destination from the plurality of motor vehicles, which are nearby of the positon. The user may then, according to the determined and presented list, decide, where he may go.

In particular, the invention provides a method, where the destinations are really valid for the current scenario. For example, in other navigation maps, there may be seen a destination, for example an outside destination, but because of the current weather, this might be not useful for the user. In particular, the method may be provided as an application for a so called connected car. As a part of the connected car functionality, information about the users car navigation may also be checked. Of course, the data is stored as a raw or anonymized data based upon the customers consent.

In particular, the method uses the steps of checking the location of the user who is willing to search. It can be through an application on a mobile phone which is linked to the car profile or on an application directly in the motor vehicle, for example on a central control unit of the motor vehicle. Then, the application locates the motor vehicles which are registered for this service from the nearby area. Then, after applying, for example anonymization if required, it provides the target destinations to the customer.

According to an embodiment, the output device is a display device of the assistance system. In particular, the output device may be a so called HMI (human machine interface), wherein the user may interact with the display device. For example, the display device may be a touch display device, wherein the user can touch on the selected destination, and then the assistance system automatically determines a route to the selected destination. Alternatively, the output device may also be a speaker device, where in the list may be presented in an acoustic manner.

In another embodiment a top down list is created and presented by the electronic computing device. For example, the plurality of current destinations are gathered and the destinations are "summarized" together. For example, then the destination, to which the highest amount of motor vehicles may drive, maybe on the top of the top down list. Therefore, the user can choose between the top destinations of the plurality of motor vehicles.

According to another embodiment a predetermined number of the current destinations are presented on the output device. For example, the top 10 of the destinations are presented on the output device. Therefore, just the destinations, which are represented with a high number of visits by other motor vehicles, are shown on the display device. Therefore, just a preselected number of destinations is presented.

In another advantageous form of configuration the presented destinations are filtered depending on a predetermined filter default of a user of the assistance system. Therefore, an individual destination list can be presented on the output device.

According to another embodiment, the destinations are filtered by a predetermined distance threshold for the area and/or predetermined distance threshold to the destinations and/or a predetermined type of destinations and/or a predetermined type of the determined motor vehicles. For example, just an area of 1000 meters around the motor vehicle may be used or determining the plurality of further motor vehicles. Furthermore, for example just a threshold for 100 kilometers may be selected, wherein the destination has to be. Another filter may be the type of the destinations, for example outside destinations may be filtered out or just restaurants may be presented. Furthermore, just a type of the motor vehicle may be used, for example just motor vehicles with children inside or just passenger cars. Therefore, an individual destination can be represented in the list for the user.

Furthermore, it has turned out to be advantageous if a destination time of the motor vehicle is preset by a user and depending on the preset destination time the assistance system is determining the plurality of further motor vehicles before the destination time. In particular, for example the user may set the destination time on the next day at 08:00 o'clock. Therefore, the assistance system may be configured for searching the plurality of further motor vehicles at quarter to 8 and then, when the user might use the motor vehicle, the list with the destinations may also be presented.

Furthermore, it has turned out be advantageous if the plurality of further motor vehicles are anonymized by the electronic computing device. In particular, just the destination without any further individual information of the further motor vehicles may be presented on the display device.

In another embodiment a current weather is taken into consideration for determining the destinations. Therefore, some of the potential destinations may be excluded to or included in the list. This may raise the comfort for a user of the motor vehicle.

Furthermore, the list may be presented on a personal device of a user of the assistance systems and/or the method is controlled by the personal device and/or a destination time is preset on the personal device. The personal device therefore may be connected with the assistance system. Therefore, the user may control the method outside of the motor vehicle, for example before a destination of the motor vehicle. The personal device may be for example a smartphone or tablet.

According to another embodiment the personal device is connected via an application with a communication module of the assistance system. Therefore a comfortable navigation of the motor vehicle may be realized.

The method is in particular a computer-implemented method. Therefore, another aspect of the invention relates to a computer program product comprising means for performing the method according to the preceding aspect. The computer program product may also be called computer program.

Another aspect of the invention therefore relates to a computer-readable storage medium comprising the computer program product.

Another aspect of the invention relates to an assistance system of a motor vehicle, comprising at least one detection device and one electronic computing device, wherein the assistance system is configured for performing a method according to the preceding aspect. In particular, the method is performed by the assistance system.

The electronic computing device may comprise processors, circuits, in particular integrated circuits, and further electronic means, for performing the method.

Another aspect of the invention relates to a motor vehicle comprising the assistance system according to the preceding aspect.

The invention also includes further embodiments of the assistance system and the motor vehicle according to the invention which have features described in connection with the further embodiments of the method according to the invention. For this reason, the corresponding further embodiments of the assistance system and the motor vehicle according to the invention are not described again here.

The invention also comprises combinations of the feature of the embodiment described.

Examples of embodiments of the invention are described below.

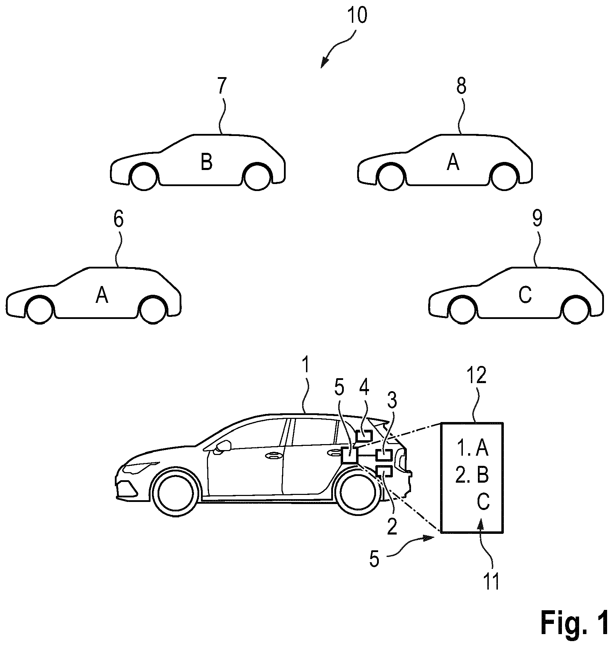

For this purpose, Fig. 1 shows a schematic view of an embodiment of a motor vehicle comprising an embodiment of the assistance system.

The embodiment explained below is a preferred embodiment of the invention. In the embodiment example, the described components each represent individual features of the invention which are to be considered independently of one another and which each also further develops the invention independently of one another and are thus also to be regarded as a component of the invention individually or in a combination other than that shown. Furthermore, the described embodiment can also supplemented by further of the described features of the invention.

In the figure, functional identically elements are each provided with the same reference signs.

Fig. 1 shows a schematic side view according to an embodiment of a motor vehicle 1 comprising an assistance system 2. The assistance system 2 may comprise an electronic computing device 3 as well as a position detection device 4. Furthermore, the assistance system 2 may also comprise at least one output device 5, wherein the output device 5 is shown in Fig. 1 in an enlarged view. In particular, the output device 5 is presented as a display device 12.

Furthermore, a plurality of motor vehicles 6, 7, 8, 9 are shown. For example, a first further motor vehicle 6 may have destination A. A second further motor vehicle 7 may have a destination B. A third further motor vehicle 8 may have a destination A. A fourth further motor vehicle 9 may have a destination C.

In particular a method for operating the assistance system 2 of the motor vehicle 1 is presented. A current position P of the motor vehicle 1 is detected by the position detection device 4. The plurality of further motor vehicles 6, 7, 8, 9 is determined in a predetermined area 10 around the detected position P by the electronic computing device 3. A plurality of current destinations A, B, C of each of the further motor vehicles 6, 7, 8, 9 of the plurality of further motor vehicles 6, 7, 8, 9 are determined. A list 11 of the determined destinations A, B, C is created and the list 11 is presented on the output device 4 of assistance system 2, in particular on the display device 12. The display device 12 may be for example a touch screen. The display device 12 may be configured as a central human machine interface. The display device may also be regarded as a user interface.

In particular the Fig. 1 shows, that the list 11 may be a top down list 11 and the top down list 11 is a presented on the display device 12. In particular, as shown, the first further motor vehicle 6 and the third further motor vehicle 8 may have the same destination A. Therefore, in this embodiment, two further motor vehicles 6, 7, 8, 9 are driving to the destination A, wherein just one further motor vehicle 6, 7, 8, 9 is driving to destination B and one further motor vehicle 6, 7, 8, 9 is driving to destination C. Therefore, destination A is on the first place on the top down list 11.

In particular, the presented destinations A, B, C may be filtered depending on a predetermined filter default of a user of the assistance system 2. In particular, the destinations A, B, C may be filtered by a predetermined distance threshold for the area 10 and/or by a predetermined distance threshold to the destinations A, B, C and/or a predetermined type of destinations A, B, C and/or predetermined type of the determined motor vehicles 6, 7, 8, 9.

Furthermore, a destination time of the motor vehicle 1 may be preset by a user and depending on the preset destination time, the assistance system 2 is determining the plurality of further motor vehicles 6, 7, 8, 9 before the destination time. In particular, the plurality of further motor vehicles 6, 7, 8, 9 may be anonymized by the electronic computing device 3.

In particular, the invention provides a method, where the destinations A, B, C are really valid for the current scenario. For example, in other navigation maps, there may be seen a destination A, B, C, for example an outside destination A, B, C, but because of the current weather, this might be not useful for the user. In particular, the method may be provided as an application for a so called connected car. As a part of the connected car functionality, information about the users car navigation may also be checked. Of course, the data is stored as a raw or anonymized data based upon the customers consent.

In particular, the method uses the steps of checking the location of the user who is willing to search. It can be through an application on a mobile phone which is linked to the car profile or on an application directly in the motor vehicle 1, for example on a central control unit of the motor vehicle 1. Then, the application locates the further motor vehicles 6 ,7, 8, 9 which are registered for this service from the nearby area 10. Then, after applying, for example anonymization if required, it provides the target destinations to the customer.

### List of reference signs

- 1: motor vehicle
- 2: assistance system
- 3: electronic computing device
- 4: position detection device
- 5: output device
- 6: first further motor vehicle
- 7: second further motor vehicle
- 8: third further motor vehicle
- 9: fourth further motor vehicle
- 10: area
- 11: list
- 12: display device
- A: destination
- B: destination
- C: destination
- P: position

## Claims

1. Method for operating an assistance system (2) of a motor vehicle (1), comprising the steps of:
- detecting a current position (P) of the motor vehicle (1) by a position detection device (4) of the assistance system (2);
- determining a plurality of further motor vehicles (6, 7, 8, 9) in a predetermined area (10) around the detected position (P) of the motor vehicle (1) by an electronic computing device (3) of the assistance system (2);
- determining a plurality of current destinations (A, B, C) of each further motor vehicle (6, 7, 8, 9) of the plurality of further motor vehicles (6, 7, 8, 9); and
- creating a list (11) of the determined destinations (A, B, C) and presenting the list (11) of the determined destination (A, B, C) on an output device (5) of the assistance system (2).

2. Method according to claim 1,
**characterized in that**
the output device (5) is a display device (12) of the assistance system (2).

3. Method according to claim 1 or 2,
**characterized in that**
a top down list (11) is created and presented by the electronic computing device (3).

4. Method according to any one of the preceding claims,
**characterized in that**
a predetermined number of determined destinations (A, B, C) are presented on the output device (5).

5. Method according to any one of the preceding claims,
**characterized in that**
the presented destinations (A, B, C) are filtered depending on a predetermined filter default of a user of the assistance system (2).

6. Method according to any one of the preceding claims,
**characterized in that**
the destinations (A, B, C) are filtered by a predetermined distance threshold for the area (10) and/or by a predetermined distance threshold to the destinations (A, B, C) and/or a predetermined type of destinations (A, B, C) and/or a predetermined type of the determined further motor vehicles (6, 7, 8, 9).

7. Method according to any one of the preceding claims,
**characterized in that**
a destination time of the motor vehicle (1) is preset by a user and depending on the preset destination time the assistance system (2) determines the plurality of further motor vehicles (6, 7, 8, 9) before the destination time.

8. Method according to any one of the preceding claims,
**characterized in that**
the plurality of further motor vehicles (6, 7, 8, 9) are anonymized by the electronic computing device (3).

9. Method according to any one of the preceding claims,
**characterized in that**
a current weather is taken into consideration for determining the destinations (A, B, C).

10. Method according to any one of the preceding claims,
**characterized in that**
the list (11) is presented on a personal device of a user of the assistance systems (2) and/or the method is controlled by the personal device and/or a destination time is preset on the personal device.

11. Method according to claim 10,
**characterized in that**
the personal device is connected via an application with a communication module of the assistance system (2).

12. Computer program product comprising means for performing a method according to any one of claims 1 to 11.

13. Computer-readable storage medium comprising at least one computer program product according to claim 12.

14. Assistance system (2) of a motor vehicle (1), comprising at least one position detection device (4), one output device (5) and one electronic computing device (3), wherein the assistance system (2) is configured for performing a method according to any one of claims 1 to 11.

15. Motor vehicle (1) comprising at least one assistance system (2) according to claim 14.
